# EUROPEAN PATENT APPLICATION

(11) **EP 2 377 490 A2**
(43) Date of publication of application: **19.10.2011**
(21) Application number: 11162456.5
(22) Date of filing: 14.04.2011
(51) Int. Cl.: A61C 8/00

(54) **Abutment extender for one piece implant**

(30) Priority: 15.04.2010 TW 099206800
(71) Applicant: Chen, Chun-Leon, Las Vegas, NV 89146 (US)
(72) Inventor: Chen, Chun-Leon, Las Vegas, NV 89146 (US)
(74) Representative: Ruschke, Hans Edvard

(57) **Abstract**

An abutment extender for use with a one piece implant in a dental implant surgery is disclosed to have a plug member insertable into the top hole of the one piece implant, an extension member located on the top side of the plug member and having a diameter equal to the diameter of the abutment of the one piece implant, a recessed hole located on the top side of the extension member, and a screw inserted into the recessed hole and for threading through the plug member into the abutment of the one piece implant to affix the extension member and the plug member to the one piece implant.

## Description

### BACKGROUND OF THE INVENTION

### 1. Field of the Invention:

The present invention relates to dental implant technology and more particularly, to an abutment extender for one piece implant that is connectable to a one piece implant to extend the abutment for application to a patient having a high gum.

### 2. Description of the Related Art:

For the sake of dental health and beauty, dental implant has become a common surgery. Conventionally, a dental implant surgery is to embed an implant in the patient's gum, and then to thread an abutment into the implant, and then to install a crown in the abutment after wound healed, and thus the dental implant surgery is done.

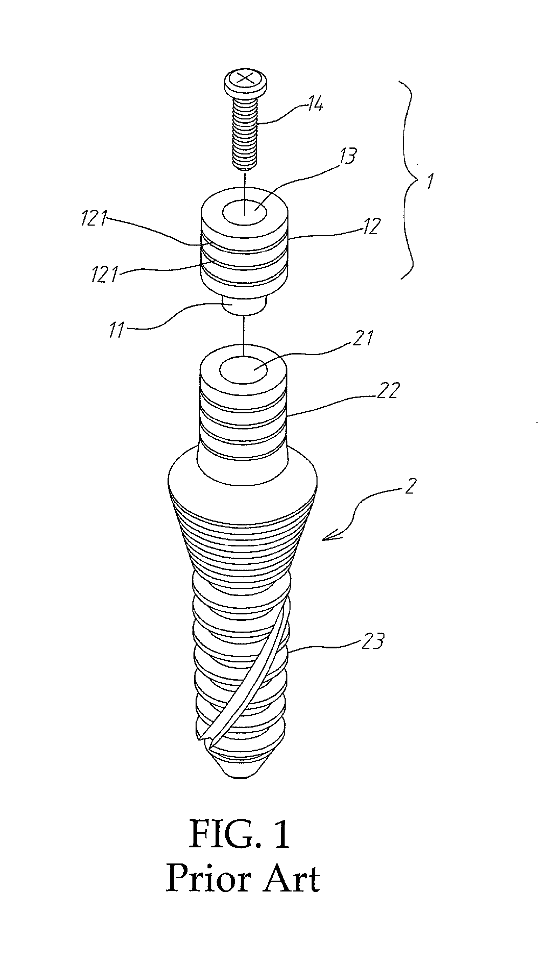

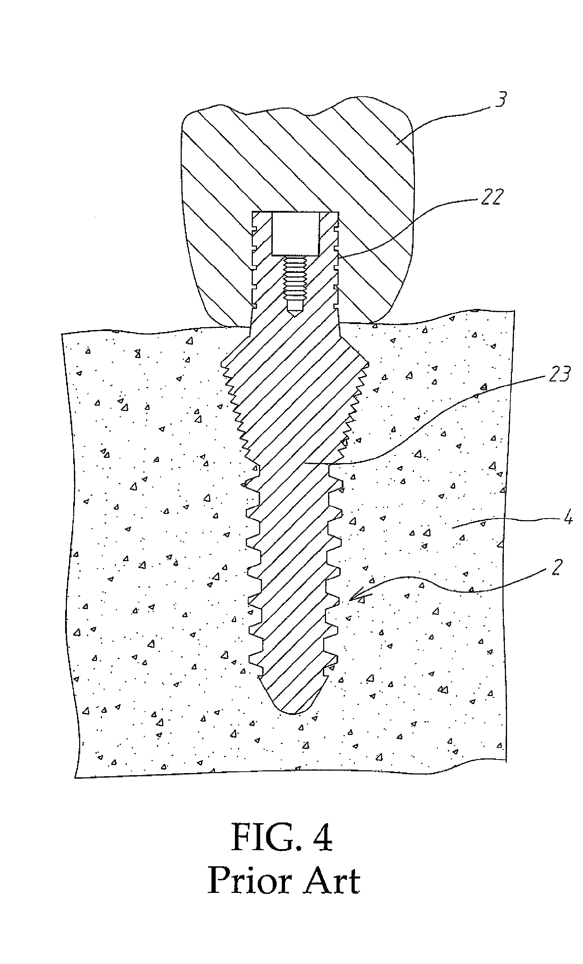

There is known a one piece implant design, which has the abutment and the implant made in integrity to facilitate installation of the abutment and the implant at one time. As shown in FIGS. 1 and 4, a one piece implant **2** comprises a shank **23** having an integrated abutment **22** at the top side thereof. After installation of the one piece implant **2** in the gum **4,** the abutment **22** protrudes over the top side of the gum **4** to facilitate installation of a crown **3.**

However, due to that every patient has a different height of gum **4,** installing a one piece abutment in a relatively higher gum **4,** the abutment **22** of the one piece implant 2 may go down in the gum **4.** When this problem occurs, the dentist may be unable to install a crown 3 to the abutment 22.

### SUMMARY OF THE INVENTION

The present invention has been accomplished under the circumstances in view. It is the main object of the present invention to provide an abutment extender for one piece implant that is connectable to a one piece implant to extend the abutment for application to a patient having a high gum.

To achieve this and other objects of the present invention, an abutment extender for use with a one piece implant in a dental implant surgery comprises a plug member insertable into the top hole of the one piece implant, an extension member located on the top side of the plug member and having a diameter equal to the diameter of the abutment of the one piece implant, a recessed hole located on the top side of the extension member, and a screw inserted into the recessed hole and for threading through the plug member into the abutment of the one piece implant to affix the extension member and the plug member to the one piece implant.

Thus, the use of the abutment extender widens the application range of a one piece implant, facilitating application of a dental implant surgery to a patient having a high gum.

### BRIEF DESCRIPTION OF THE DRAWINGS

FIG. 1 is an exploded view a conventional one piece implant and an abutment extender made in accordance with a first embodiment of the present invention.
FIG. 2 is an elevational assembly view of FIG. 1.
FIG. 3 is a schematic sectional view, showing the assembly of the one piece implant and the abutment extender of FIG. 2 installed in a patient's gum.
FIG. 4 is a schematic sectional view, showing a conventional one piece abutment installed in a patient's gum.
FIG. 5 is an exploded view of a second embodiment of the present invention.
FIG. 6 is a sectional exploded view of the second embodiment of the present invention.
FIG. 7 corresponds to FIG. 6, showing the abutment extender affixed to the one piece implant.
FIG. 8 is a cross sectional view taken along line A-A of FIG. 7.
FIG. 9 is a sectional exploded view of a third embodiment of the present invention.
FIG. 10 is a sectional exploded view of a fourth embodiment of the present invention.
FIG. 11 is a sectional exploded view of a fifth embodiment of the present invention.
FIG. 12 is a sectional exploded view of a sixth embodiment of the present invention.

### DETAILED DESCRIPTION OF THE PREFERRED EMBODIMENT

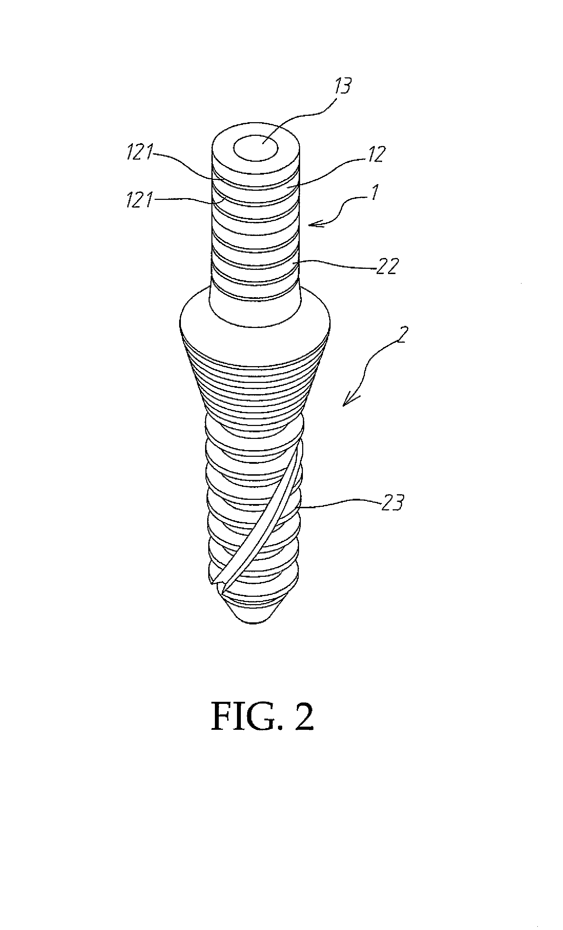

Referring to FIGS. 1~3, an abutment extender **1** is shown for use with a one piece implant **2.** The abutment extender **1** comprises a plug member **11,** an extension member **12,** a recessed hole **13** and a screw **14.**

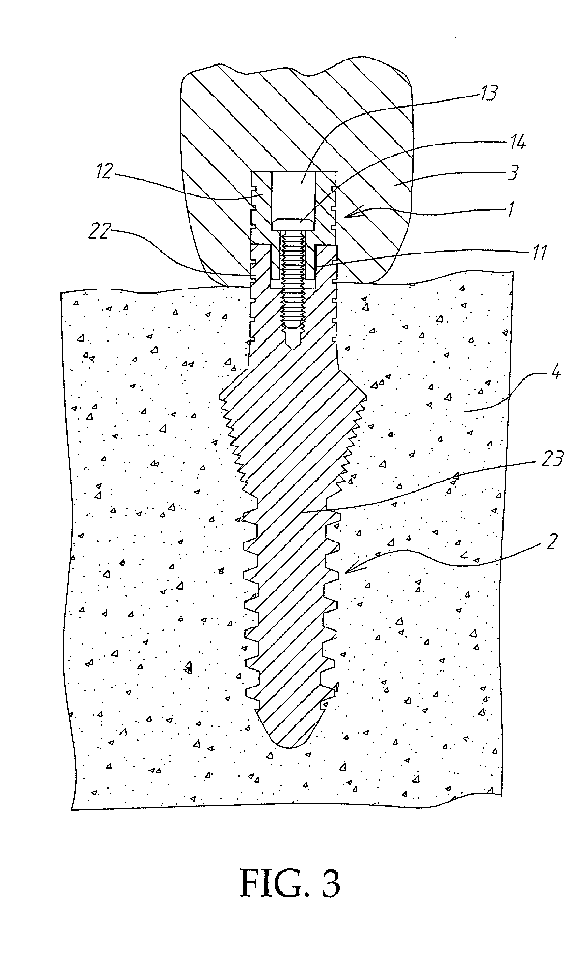

The plug member **11** is press-fitted into a top hole **21** on the one piece implant **2.** The extension member **12** is formed integral with the top side of the plug member **11,** having a diameter equal to the diameter of the abutment **22** of the one piece implant **2.** After installation of the plug member **11** in the top hole **21** of the one piece implant **2,** the extension member **12** is abutted against the topmost edge of the abutment **22** of the one piece implant **2** in a flush manner. The recessed hole **13** is located on the top side of the extension member **12** and extends axially downwardly toward the plug member **11.** The screw **14** is to be inserted into the recessed hole **13** and axially threaded through the plug member **11** into the abutment **22** to affix the extension member **12** and the plug member **11** to the one piece implant **2** (see FIG. 3).

Further, the extension member **12** has at least one groove **121** extending around the periphery to facilitate engagement of a crown 13 (see FIG. 3).

Normally, the shank **23** of the one piece implant **2** is implanted into the gum **4,** and the abutment **22** is kept above the top edge of the gum **4** for the installation of the crown **3.** However, if a patient has a relatively higher gum **4,** the one piece implant **2** will be completely embedded into the gum **4,** as shown in FIG. 3, and the abutment **22** will partially sink in the gum **4.** At this time, the abutment extender **1** must be used. By means of inserting the screw **14** into the recessed hole **13** and axially threading the screw **14** through the plug member **11** into the abutment **22,** the abutment extender **1** is affixed to the one piece implant 2 to hold the extension member 12 above the gum **4** for the installation of the crown **3.**

Obviously, the use of the abutment extender **1** widens the application range of the one piece implant **2,** facilitating application of a dental implant surgery to a patient having a high gum.

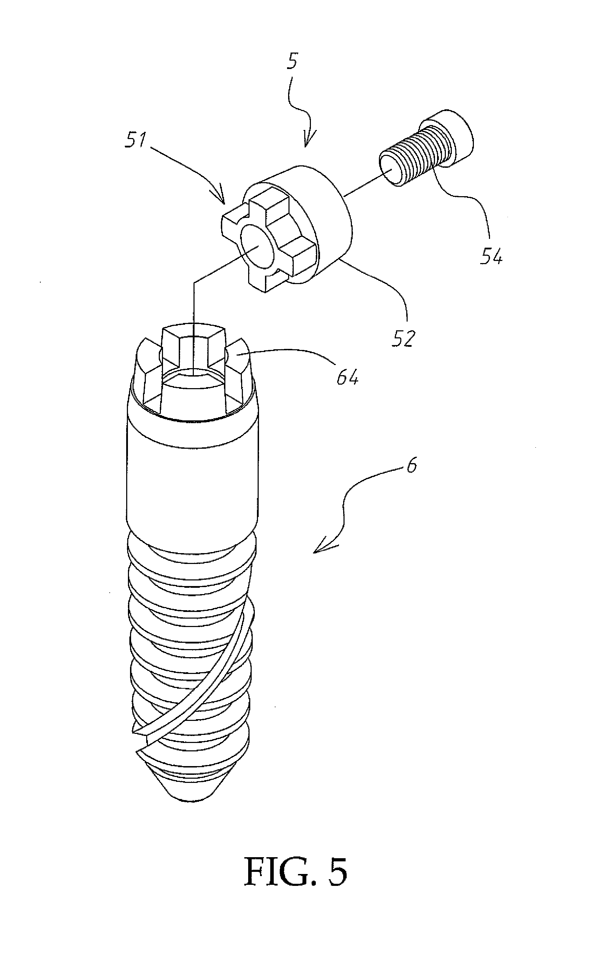

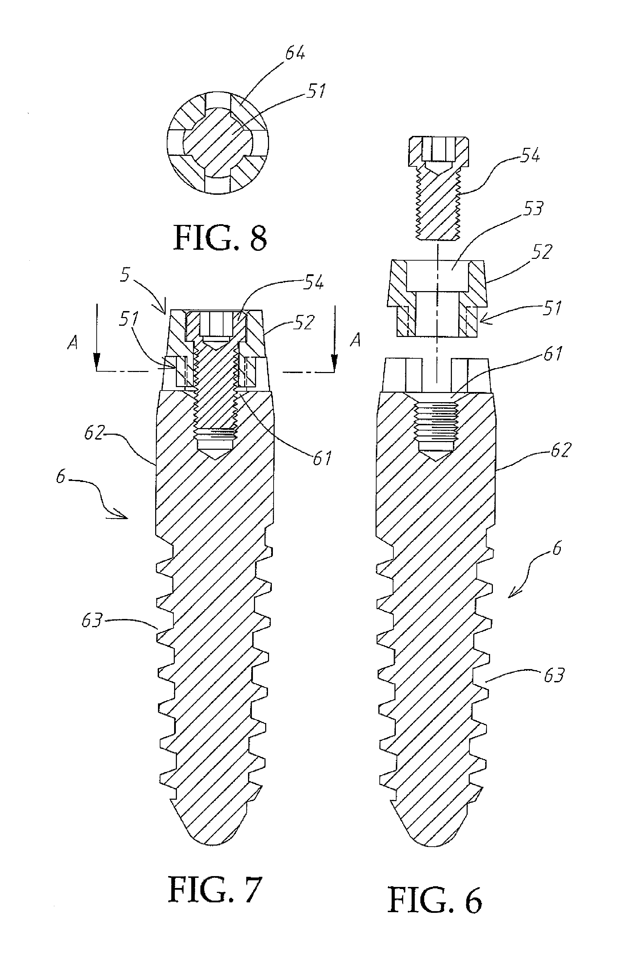

Referring to FIGS. 5~8, an abutment extender **5** in accordance with a second embodiment of the present invention is shown for use with a one piece implant **6.** The abutment extender 5 comprises a plug member **51,** an extension member **52,** a recessed hole **53** and a screw **54.** The one piece implant 6 comprises a shank **63,** an abutment **62** formed integral with the top side of the shank **63,** a top hole **61** located on and axially downwardly extended from the top side of the abutment **62** and a mounting groove **64** located on the top side of the abutment **62** around the top hole **61.**

The abutment extender **5** of this second embodiment is substantially similar to the aforesaid first embodiment with the exception that the plug member **51** of the abutment extender 5 of this second embodiment has a star-shaped profile fitting the star-shaped configuration of the mounting groove **64.** Thus, when the plug member **51** of the abutment extender **5** is press-fitted into the mounting groove **64** of the one piece implant **6,** the abutment extender **5** is prohibited from rotation relative to the one piece implant **6.** Thus, the use of the abutment extender **5** greatly extends the height of the abutment **62** of the one piece implant **6.**

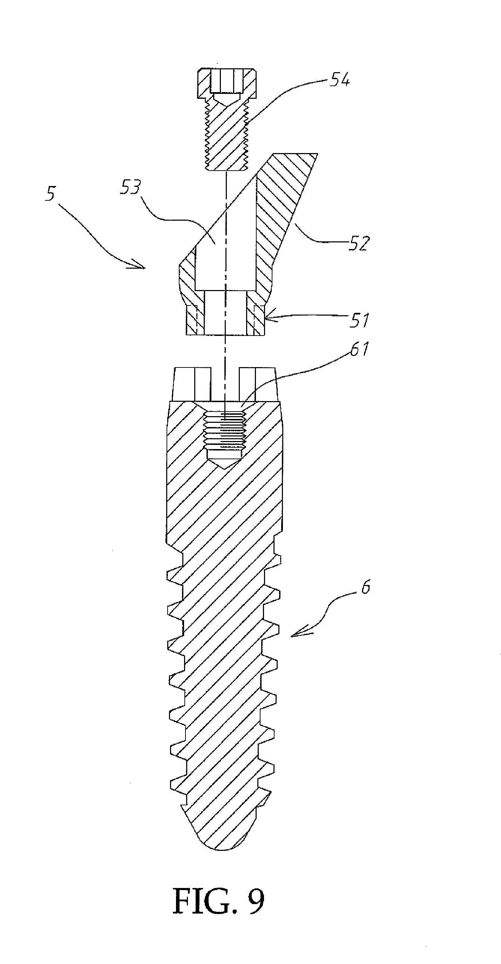

Referring to FIG. 9, an abutment extender **5** in accordance with a third embodiment of the present invention is shown for use with a one piece implant **6.** This abutment extender **5** of this third embodiment is substantially similar to the aforesaid second embodiment with the exception that the extension member **52** extends obliquely in one direction to fit a patient having an inclined gum. However, the recessed hole **53** is kept in axial alignment with the top hole **61** of the one piece implant **6,** facilitating installation of the screw **54.**

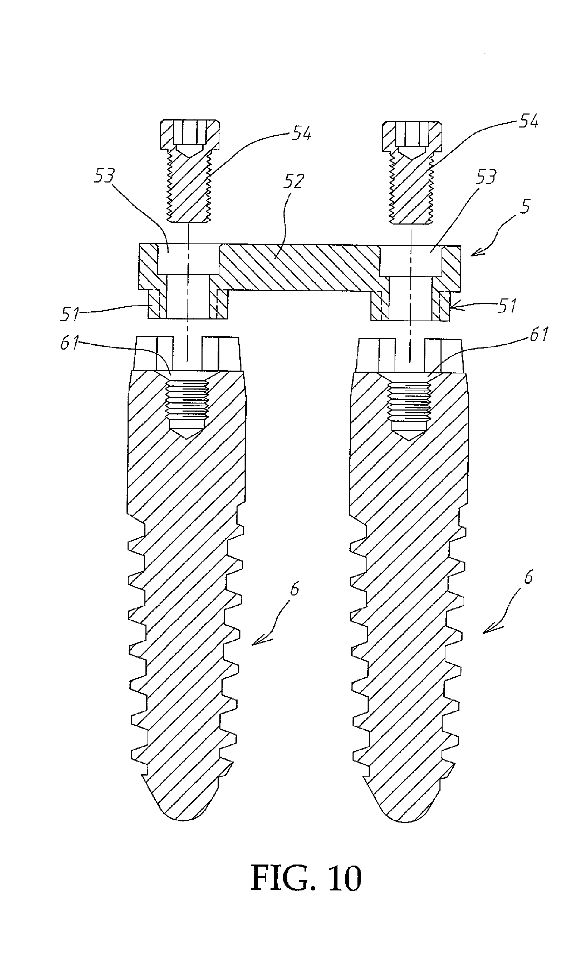

Referring to FIG. 10, an abutment extender **5** in accordance with a fourth embodiment of the present invention is shown for use with two pieces of one piece implants **6.** The abutment extender **5** comprises two plug members **51,** an extension member **52,** two recessed holes **53** and two screws **54.** The two plug members **51** are respectively the top hole **61** of each of the two pieces of one piece implants **6.** The two screws **54** are respectively inserted into the recessed holes **53** to affix the abutment extender **5** to the two pieces of one piece implants **6.** Thus, a dentist can implant two pieces of one piece implants **6** at one time.

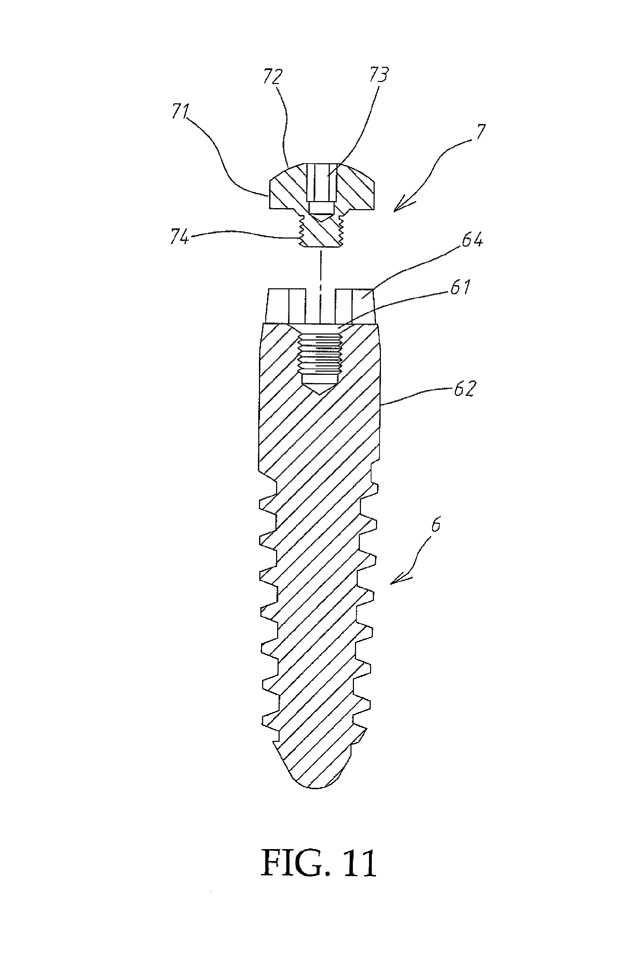

Referring to FIG. 11, an abutment extender **7** in accordance with a fifth embodiment of the present invention is shown for use with a one piece implant **6.** The abutment extender **7** comprises a plug member **71,** an extension member **72,** a recessed hole **73** and a screw **74.** The plug member **71** has a star-shaped profile fitting the mounting groove **64** of the one piece implant **6.** The screw **74** is located on the bottom side of the plug member **71** for threading into the top hole **61** of the one piece implants **6** directly. The extension member **72** is adapted to increase the height of the abutment **62** of the one piece implant **6.** The recessed hole **73** extends axially downwardly from the topmost edge of the extension member **72** for the mounting of a crown or any other object.

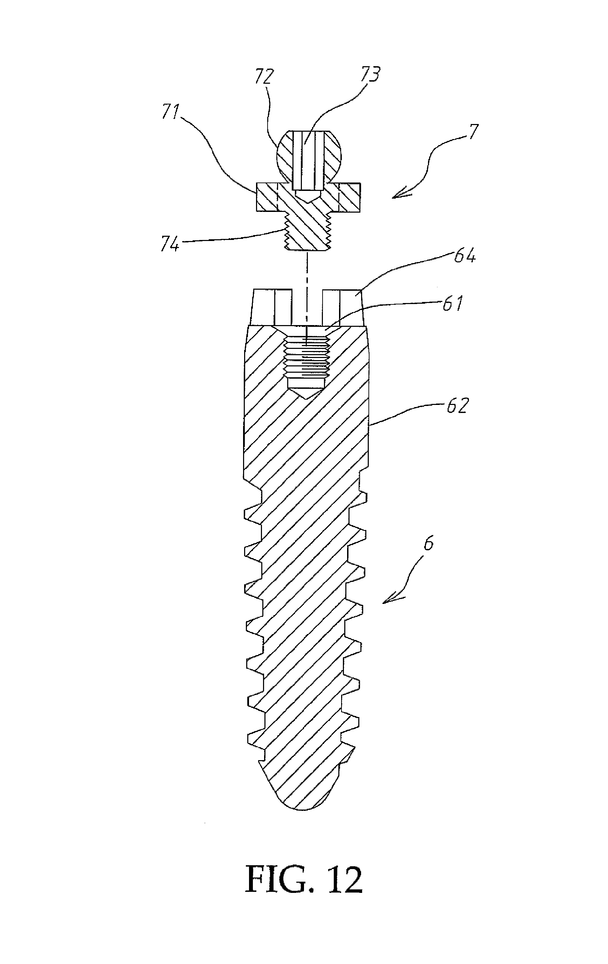

FIG. 12 illustrates an abutment extender 7 in accordance with a sixth embodiment of the present invention. This sixth embodiment is substantially similar to the aforesaid fifth embodiment with the exception of the ball-like shape of the extension member **72.**

Although particular embodiments of the invention have been described in detail for purposes of illustration, various modifications and enhancements may be made without departing from the spirit and scope of the invention. Accordingly, the invention is not to be limited except as by the appended claims.

## Claims

1. An abutment extender (1, 5, 7) for use with a one piece implant (2, 6) having a shank (23, 63), an abutment (22, 62) located on a top side of said shank (23, 63) and a top hole (21, 61) located on a top side of said abutment (22, 62), comprising:
a plug member (11, 51, 71) insertable into the top hole (21, 61) of said one piece implant (2, 6);
an extension member (12, 52, 72) located on a top side of said plug member (11, 51, 71);
a recessed hole (13, 53, 73) located on a top side of said extension member (12, 52, 72) and extending axially downwardly toward said plug member (11, 51, 71); and
a screw (14, 54, 74) inserted into said recessed hole (13, 53, 73) and for threading through said plug member (11, 51, 71) into the abutment (22, 62) of said one piece implant (2, 6) to affix said extension member (12, 52, 72) and said plug member (11, 51, 71) to said one piece implant (2, 6).

2. The abutment extender (1) as claimed in claim 1, wherein said extension member (12) comprises at least one groove (121) extending around the periphery thereof.

3. The abutment extender (1) as claimed in claim 1 or 2, wherein said extension member (12) has a diameter equal to the diameter of the abutment (22) of said one piece implant (2).

4. The abutment extender (5) as claimed in any preceding claim, wherein said plug member (51) has a star-shaped profile fitting a star-shaped mounting groove (64) on said one piece implant (6).

5. The abutment extender (7) as claimed in claim 3, wherein said extension member (72) is shaped like a ball.

6. The abutment extender (5) as claimed in claim 3, wherein said extension member (52) extends obliquely in one direction relative to said plug member (51); said recessed hole (53) is kept in axial alignment with the top hole (61) of said one piece implant (6).

7. An abutment extender (5) for use with two pieces of one piece implants (6) in a dental implant surgery, each said one piece implant (6) having a shank (63), an abutment located on a top side of said shank (63) and a top hole (61) located on a top side of said abutment, comprising:
two plug members (51) insertable into the top holes (61) of said two pieces of one piece implants (6);
an extension member (52) located on a top side of each said plug member (51), said extension member (52);
two recessed holes (53) located on a top side of said extension member (52) corresponding to said plug members (51); and
two screws (54) respectively inserted into said recessed holes (53) and for threading through said plug members (51) into the abutments of said two pieces of one piece implants (6) to affix said extension member (52) and said plug members (51) to said two pieces of one piece implants (6).

8. A system comprising an abutment extender (5) according to any of claims 1-6 and said one-piece implant (2, 6), wherein the abutment extender is affixed to one-piece implant by said screw (14, 54, 74).

9. A system comprising an abutment extender (5) according to claim 7 and two one-piece implants (6) each implant (6) having a shank (63), an abutment located on a top side of the shank and a top hole (61) located on a top side of said abutment, wherein the abutment extender (5) is affixed to each of the one-piece implants (6) by a respective one of said screws (54).
